Europäisches Patentamt

**European Patent Office**

Office européen des brevets

(11) Publication number: **0 079 796**
**A2**

# (12) EUROPEAN PATENT APPLICATION

(21) Application number: **82306087.6**

(22) Date of filing: **16.11.82**

(51) Int. Cl.³: **B 22 F 9/04**
**B 22 F 1/00**

(30) Priority: **17.11.81 GB 8134588**

(43) Date of publication of application:
**25.05.83 Bulletin 83/21**

(84) Designated Contracting States:
**AT BE CH DE FR GB IT LI LU NL SE**

(71) Applicant: **Williamson, Ian**
**Flat 4 6, Surbiton Hill Park**
**Surbiton Surrey(GB)**

(72) Inventor: **Williamson, Ian**
**Flat 4 6, Surbiton Hill Park**
**Surbiton Surrey(GB)**

(74) Representative: **Bernard, Alan Peter et al,**
**F.J. CLEVELAND & COMPANY 40/43 Chancery Lane**
**London WC2A 1JQ(GB)**

(54) Process for producing particulate metallic material.

(57) The process relies on the use of ferrous swarf, that is the waste material from milling, boring operations etc. The material is subjected to a heat treatment, typically carbonitriding to harden it. The material is then crushed to provide material for use as blasting shot or as a sintering powder and the shot is characterised by angular pieces, hardness and durability.

EP 0 079 796 A2

DE-GREASING

HEAT TREATMENT

QUENCHING

CRUSHING

SIEVING

FIG.1

- 1 -

## DESCRIPTION

This invention relates to a process for producing particulate metallic material.

One type of particulate material that the process may be used to produce is ferrous abrasive material. Ferrous materials have considerable advantages over sand as abrasives. In blast cleaning ferrous abrasive material is frequently used and such material is classified as 'shot' where the particles are generally rounded, and as 'grit' where the particles are angular.

The conventional method of producing shot for blast cleaning begins with the step of melting scrap ferrous material using an arc furnace. Only certain grades of metal are used and typically the metals are confined to steels that are low in sulphur and phosphorus. The resultant molten metal is poured slowly through a water curtain to produce globules of various sizes. These globules are then mechanically milled and sieved to produce grit and shot of various grades. A secondary tempering process may be carried out to improve the toughness of the grit or shot.

This process has several disadvantages. First, it requires a relatively large amount of energy, _inter alia_, to supply the arc furnaces. Second, the globular material produced from the molten metal has a high porosity ( 15%), and hence provides a rather friable product with a relatively short recycling lifetime. As mentioned above, an additional tempering step can be incorporated and this may increase the life of the shot, but it also reduces the cutting effect of the particles. Thirdly the ferrous scrap used as a starting material is relatively expensive.

The invention may also be used to produce a fine powder of ferrous metal. Such powder is of use in the powder metallurgical field, for example to manufacture solid articles by sintering. The conventional processes include the steps of mixing raw iron powder with alloy elements, presintering at around 800°C to burn off the sterate binder sintering at a high temperature to allow diffusion, and finally case-hardening, carried out as a further independent step.

The present invention provides an advantageous method of producing particulate metallic material, and relies on an alternative starting material to that which is conventionally used.

According to the present invention there is provided a process for producing particulate metallic material utilising ferrous swarf as starting material, treating the ferrous material to harden at least the surfaces thereof, and crushing or otherwise reducing the material into suitably sized particles.

The step of treating the ferrous material may comprise gas-carburising or a carbo-nitriding operation. The treatment may also include quenching following gas-carburising or carbo-nitriding.

- 4 -

The particulate material may be produced in a range of particle sizes, and different fractions of particles, each fraction containing particles of roughly similar size, may be obtained by sieving the crushed material through layers of variously sized sieves. A fraction containing the smallest particles may effectively constitute a powder, and if powder is the main requirement of the process the crushing process can be prolonged or otherwise modified so that powder is the main end-product.

In many cases the swarf will need to be initially milled or otherwise reduced in size so that it is in a free-flowing form prior to the heat-treatment stage.

Embodiments of the present invention will now be described, by way of example only, with reference to the accompanying drawings.

In the drawings:

Figure 1 is a schematic flow diagram illustrating an example of the process, and

- 5 -

Figure 2 is a graph illustrating the transformation during hardening treatment.

Processes for producing particulate metallic material in accordance with the invention include processes for producing blasting grit composed of ferritic steel using ferritic steel swarf as a starting material. This swarf is industrial waste material and is often merely an inconvenience in industrial plants. It is therefore very cheap to obtain compared with the cost of larger pieces of scrap used in the conventional processes. The ferritic swarf is likely to be in pieces varying in thickness from 10 thou to 0.6 inches inclusive, and varying in width depending on its source. This can be segregated into 'heavy' and 'light' swarf prior to treatment so that well-defined grades of grit result.

Depending upon the size and uniformity of the pieces the swarf may need to be reduced to pieces of suitable size, and the product is characterised by a large frequency of generally rectangular sides amongst the pieces, so that compared with conventional grit or shot these pieces are more like small oblong blocks. This general shape arises from the use of typical factory swarf.

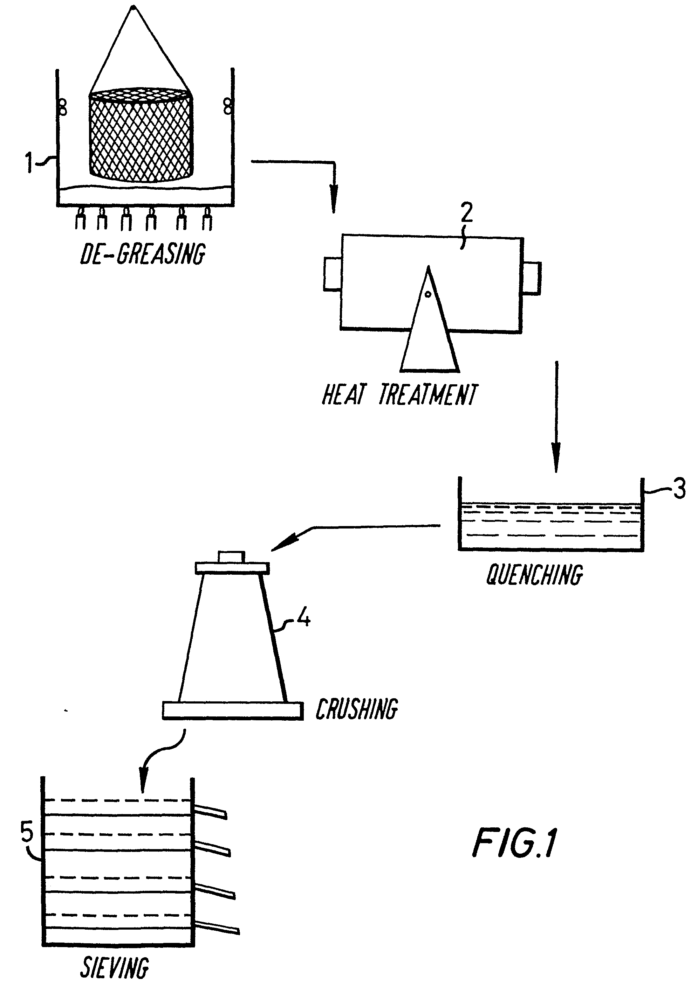

One Example of the process will now be described with reference to Figure 1.

Swarf comprising turnings from mills, lathes and other metal working machines is subjected to an initial hammer milling treatment simply to ensure that the pieces are of such sizes that the material flows freely. The swarf may contain various types of ferrous material including mild steels and highly-alloyed high carbon steel. The pieces of swarf are fed into a vapour trichloroethylene bath 1 where they are de-greased and in particular cutting oils are removed. Such de-greasing processes are well known.

The pieces of swarf are then fed to a rotary retort furnace 2 of front-loading, tipper construction of a type commonly used in the manufacture of ball-bearings. The atmosphere of the furnace is determined by a previously introduced endothermic gas containing gaseous or liquid hydrocarbons such as propane or butane. Ammonia is introduced into the furnace and as a result both nitrogen and carbon are made available to interact with the constituents of the swarf in the surface regions of the pieces. The furnace is maintained at 800° to 1000°C, and a batch of material is subjected to this carbo-nitriding process for up to 4 hours, the furnace being rotated during this time.

The pieces of material are tipped from the furnace into a quenching bath 3 containing oil, water or a plastics-based quenching medium, thereby cooling the pieces to normal temperature. The pieces of material emerge from this stage having hardened surfaces or even being hardened throughout depending upon the duration of the process and the type of swarf used. The hardened parts may have a homogeneous metallurgical structure or can alternatively comprise several different metallurgical zones as determined by the raw material, the process temperature and time and the quenching media.

Following/the quenching step the pieces are dried, if necessary, in a low temperature drying oven and then fed to a gyratory crusher 4. The output from the crusher is then fed to a fractionating sieve 5 through which the pieces are separated into fractions of approximately similar size.

Blasting shot produced by the process is characterised by angular hard surfaces and as such it is particularly effective and has a relatively long working lifetime.

The process can be controlled and grit can be produced having a chosen hardness to suit the requirements for its use. This control can be achieved by manipulation of the quenching media temperature or subsequent tempering operations.

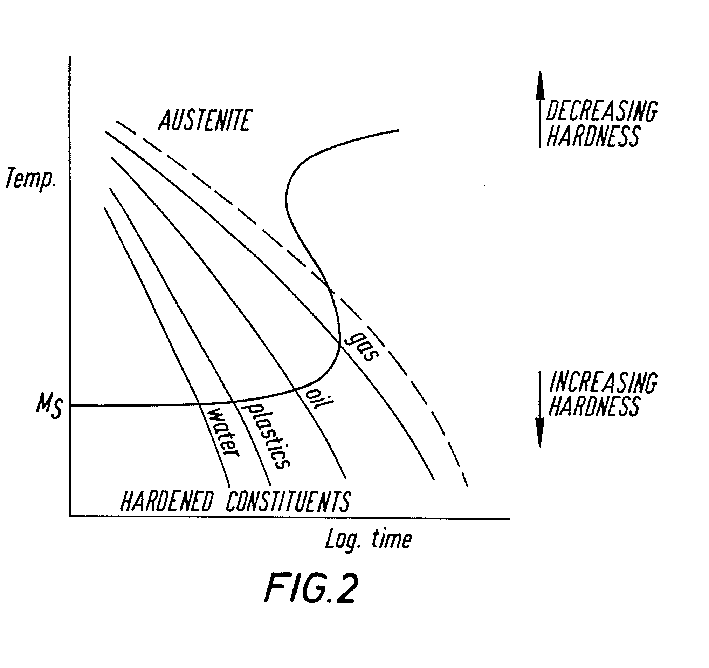

Referring to the Time-Temperature-Transformation curve in Figure 2, the different cooling rates imposed by oil, water gas and plasticised quenching media are shown and these can be varied further. The point at which the cooling curve crosses the T-T-T curve determines the metallurgical structure of the cooled material. Different structures can also be obtained by subsequent tempering operations.

The steps given in the above example may be varied in a number of ways. A gas carburising hardening process may replace the carbo-nitriding step. If the swarf is in the form of steel with a high carbon content the furnace may simply act to heat the material so that by quenching it becomes hardened. It is a feature of the process described in the above example that such types of steel swarf need not be separated from other types and the mixture may undergo the same treatment steps.

In the above example the particles passing through the finest sieve may comprise a powder. This powder whilst unsuitable for blasting shot may find application in powder metallurgical techniques. In a further example the gyratory crusher is replaced by a ball mill so that the bulk of the end material is powder. An article, when produced from this powder by a sintering process can, after sintering, simply be cooled to around 800$^{o}$C and quenched effectively to become case-hardened.

The front loading tipper is an advantageous type of furnace for use in the process, but it can be replaced, for example, by a rotary scroll furnace.

CLAIMS

1. A process for producing particulate material utilising ferrous swarf as starting material comprising treating the ferrous material to harden at least the surfaces thereof, and crushing or otherwise reducing the material into suitably sized particles.

2. A process as claimed in claim 1 wherein the particles comprise blasting shot or grit.

3. A process as claimed in claim 1 wherein the particles comprise a powder.

4. A process as claimed in any one of the preceding claims wherein the step of treating the material to harden at least the surfaces thereof comprises a carbonitriding or gas carbonising process.

5.      A process as claimed in claim 1 including the step of feeding the particles through a fractionating sieve and obtaining graded fractions of different-sized particles.

6.      A process as claimed in any one of the preceding claims in which the step of treating the material to harden the surfaces thereof is carried out in a rotary retort furnace.

7.      A process as claimed in any one of the preceding claims including the step of cutting or otherwise reducing the sizes of the pieces of swarf prior to the hardening treatment.

8.      Blasting shot or grit produced by a process as claimed in claim 1, claim 2 or any one of claims 4 to 7.

9.      A ferrous sintering powder produced by a process as claimed in claim 1 or any one of claims 3 to 7.

- 13 -

10.      A process for producing particulate material substantially as hereinbefore described with reference to, and as illustrated in, the .

accompanying drawings.

FIG.1

FIG.2